# EUROPÄISCHE PATENTSCHRIFT

(11) **EP 1 205 745 B1**
(45) Veröffentlichungstag und Bekanntmachung des Hinweises auf die Patenterteilung: **29.09.2004**
(21) Anmeldenummer: 01000593.2
(22) Anmeldetag: 05.11.2001
(51) Int. Cl.: G01N 21/89, B07C 5/34, B07C 5/342, B07C 5/10

(54) **Diodenlichtquelle für eine Zeilenkamera**
Diode light source for a line scan camera
Source lumineuse à diodes pour utilisation avec une caméra linéaire

(30) Priorität: 07.11.2000 AT 8112000 U
(43) Veröffentlichungstag der Anmeldung: 15.05.2002
(73) Patentinhaber: Binder & Co. Aktiengesellschaft, 8200 Gleisdorf (AT)
(72) Erfinder: Gschweitl, Karlheinz, A-8211, Grosspesendorf (AT)
(74) Vertreter: KLIMENT & HENHAPEL

(56) Entgegenhaltungen:
- EP-A- 0 560 605
- DE-A- 19 638 667
- US-A- 5 365 084
- US-A- 5 406 060

## Beschreibung

Gegenstand der Erfindung ist eine Vorrichtung gemäß dem Oberbegriff des Anspruches 1.

Bei derartigen Vorrichtungen zum Erfassen und Erkennen von Objekten, z.B. in Sortieranlagen, werden Kameras, meistens Zeilenkameras, eingesetzt, an denen Objekte eines Materialstromes vorbeigeführt und von den Kameras entsprechend erkannt und zugeordnet werden. Diese Erkennung und Zuordnung kann sich auf verschiedene Eigenschaften der Objekte beziehen, wie Materialzusammensetzung, Farbe, Größe oder dergleichen. Die so gewonnenen Informationen dienen in weiterer Folge der Steuerung nachfolgender Prozessabläufe, oder auch der Steuerung einer Trennvorrichtung, die die Objekte in unterschiedliche Fraktionen sortiert.

Bei durchsichtigen oder durchscheinenden Gütern wird sehr oft mit Durchsicht gearbeitet. Die Lichtquelle durchleuchtet dabei das zu analysierende Material, was eine zuverlässigere Erkennung, etwa der einzelnen Fraktionen eines Sortiergutes, ermöglicht. Als Lichtquelle für das Durchleuchten werden üblicherweise Leuchtstoffröhren verwendet, die sich zur Gänze oder teilweise über die Breite des betreffenden Anlagenabschnittes, etwa der Rutsche einer Sortieranlage, erstrecken. Über einen beschränkten Bereich, der von einer Zeilenkamera erfasst wird, wird somit gleichmäßiges Licht erzeugt, was innerhalb des von der Kamera erfassten Bereiches für gleichbleibende Beleuchtungsverhältnisse sorgt.

Der Nachteil bei der Verwendung einer Leuchtstoffröhre liegt darin, dass an beiden Enden einer Leuchtstoffröhre eine abnehmende Lichtstärke festzustellen ist, sodass nur ein beschränkter Bereich der Leuchtstoffröhren verwendet werden kann. Dadurch muss man Beleuchtungsvorrichtungen dieser Art wesentlich breiter als den Erkennungsraum der Zeilenkameras bauen. Werden etwa mehrere Leuchtstoffröhren zur Verwendung mit mehreren Zeilenkameras herangezogen, so ergibt sich dadurch eine Gesamtbreite des betreffenden Anlagenabschnittes, die wesentlich größer als der Erkennungsraum der Kameras ist. Selbst wenn beispielsweise eine lange Leuchtstoffröhre den Bereichen mehrerer Zeilenkameras als Lichtquelle dient, so sind trotzdem an den beiden Enden der Leuchtstoffröhre Bereiche vorhanden, die durch die Kameras nicht mehr für eine sichere Erkennung genutzt werden können. Die Beleuchtungsvorrichtung muss dabei wesentlich breiter als der betreffende Anlagenabschnitt sein. Ein weiterer Nachteil ergibt sich daraus, dass die Helligkeit der Lichtquelle nur als ganzes geändert bzw. gesteuert werden kann, sodass auf eventuelle Unterschiede bei den einzelnen über den Anlagenabschnitt verteilten Zeilenkameras nicht Einfluss genommen werden kann.

AT 001 264 U1 schlägt ein Messsystem für die berührungslose Abtastung der Oberfläche von Glasplatten mithilfe von Infrarot-LEDs ("Light Emitting Diodes")vor. IR-Fotodioden oder -transistoren werden als Empfängerelemente verwendet. Es sind jedoch aufgrund der vorzugsweisen Verwendung von Licht im infraroten Spektralbereich keine optischen Einrichtungen zwischen den Infrarot-LEDs und dem Materialstrom oder dem Materialstrom und den Empfängerelementen vorgesehen.

Auch in US 3 859 538 wird Infrarot-Licht verwendet, sodass keinerlei optische Einrichtungen zur Homogenisierung der Beleuchtung vorgesehen sind. Im übrigen bezieht sich dieses Dokument auf einen elektronischen Schaltkreis zur Verstärkung des Signals photoelektronischer Komponenten.

In US 5 365 084 wird ein Beleuchtungssystem für Hochgeschwindigkeits-Videoinspektionen offenbart. Es werden dabei reihenförmig angeordnete LEDs mit unterschiedlicher Wellenlänge des emittierten Lichtes verwendet. Dieses Dokument schlägt zwar Verbesserungen in der Signalverarbeitung vor, enthält aber keine Hinweise über eine Verbesserung der Ausleuchtung mithilfe optischer Maßnahmen.

Auch DE 24 26 866 B2 zeigt reihenförmig angeordnete LEDs, bezieht sich aber ansonsten auf die elektronische Datenauswertung. Auch hier bestehen Intensitätsminima in den Symmetrieebenen zwischen jeweils zwei LEDs, die mitunter Probleme bei der präzisen Identifikation von Elementen des Materialstromes verursachen können.

Ziel der Erfindung ist es, diese Nachteile zu beseitigen und eine kompakte Erkennungseinheit mit vielseitigen Einstell- und Steuerungsmöglichkeiten zu entwickeln, die eine gleichmäßige Beleuchtung des betreffenden Anlagenabschnittes sicherstellt. Erfindungsgemäß wird dies durch die kennzeichnenden Merkmale des Anspruches 1 gelöst.

Anspruch 1 bezieht sich auf die Verwendung mehrerer Dioden, die in Form einer oder mehrerer Reihen nebeneinander über die gesamte Breite eines Anlagenabschnittes zur Erkennung von Objekten, etwa die Rutsche einer Sortieranlage, oder Teile davon angeordnet sind. Diese Dioden sind getrennt voneinander regelbar sind, sodass etwa entlang der reihenförmig angeordneten Dioden die Helligkeit oder auch die Frequenz des emittierten Lichtes abschnittsweise variiert werden kann. Je nach Bedarf können aber auch mehrere Dioden einer gemeinsamen Regelung unterliegen.

Da die Dioden annähernd punktförmige Lichtquellen darstellen, ist es für eine gleichmäßige Beleuchtung des betreffenden Anlagenabschnittes allerdings entscheidend, die Verwendung einer optischen Einrichtung vorzusehen, die das von den Dioden emittierte Licht diffus erscheinen lässt. Das ermöglicht eine gleichmäßige Beleuchtung der von den Zeilenkameras erfassten Bereiche. Die in Anspruch 1 beschriebene optische Einrichtung leistet diese Vergleichmäßigung des von den Dioden emittierten Lichtes und gewährleistet somit eine sichere Erfassung des Sortiergutes und dessen Erkennung durch Kameras.

Bei Anlagen zum Erkennen und Erfassen von Objekten eines Materialstromes, etwa eines Sortiergutes, ist es prinzipiell möglich, den Materialstrom entweder mit Licht zu bestrahlen und so für die zur Erfassung durch Kameras erforderliche Helligkeit zu sorgen, oder ihn mit Licht zu durchleuchten, was besonders bei durchsichtigen oder transparenten Objekten vorteilhaft ist.

Anspruch 2 beschreibt eine vorzugsweise Anordnung der verwendeten Kameras in der erfindungsgemäßen Beleuchtungsvorrichtung und Anspruch 3 eine günstige Ausführungsform der verwendeten Dioden.

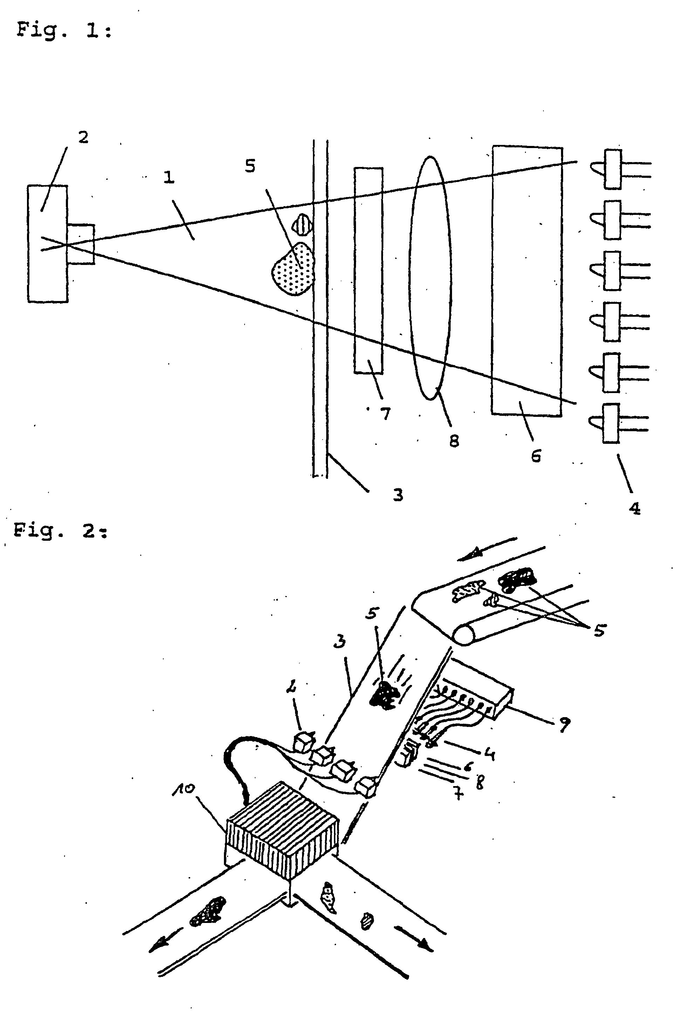

Die Erfindung soll nun anhand der beiliegenden Zeichnungen näher erläutert werden. Figur 1 zeigt dabei die relative Anordnung von Kameras, Dioden, Materialstrom sowie der optischen Einrichtung, bestehend aus den beiden Diffusoren und einer Linse. Figur 2 stellt eine Übersichtsskizze zur Illustration der Verwendung der Erfindung, etwa im Zusammenhang mit einer nachgeschalteten Sortiereinrichtung, dar.

Figur 1 zeigt dabei schematisch die erfindungsgemäße Beleuchtungsvorrichtung für den Erfassungsbereich 1 einer Zeilenkamera 2. Entlang der gesamten Breite eines Anlagenabschnittes 3, z.B. die Rutsche einer Sortieranlage, zum Erfassen von Objekten eines Materialstromes sind nebeneinander Zeilenkameras so angeordnet, dass sich die Erfassungsbereiche 1 benachbarter Kameras 2 in der Ebene des Anlagenabschnittes 3 überlappen. Der Anlagenabschnitt 3 ist dabei aus durchsichtigem oder transparentem Material gestaltet.

Dioden 4, vorzugsweise Weißlicht-Dioden, sind in Form einer oder mehrerer Reihen über die gesamte Breite des Anlagenabschnittes 3 oder teilweise davon angeordnet. Diese Dioden 4 dienen im dargestellten Ausführungsbeispiel als Lichtquellen zum Durchleuchten von durchsichtigen oder durchscheinenden Objekten 5 und werden daher so angeordnet, dass sie sich, von den Zeilenkameras aus gesehen, hinter dem Anlagenabschnitt 3 befinden. Durch eine Steuerungseinrichtung 9 können die Dioden 4 einzeln kontrolliert werden. Somit ist es möglich, entlang der Breite des Anlagenabschnittes die Menge des emittierten Lichtes für jede Diode individuell zu regeln, um so abschnittsweise die Helligkeit den Erfordernissen anpassen zu können.

Eine optische Einheit, bestehend aus einem diodenseitigen Diffusor 6, einem objektseitigen Diffusor 7 und einer dazwischenliegenden Linse 8, wandelt das von den annähernd punktförmigen Dioden-Lichtquellen emittierte Licht in diffuses Licht um. Die Linse 8 dient dazu, das vom diodenseitigen Diffusor abgestrahlte Licht in seiner Lichtstärke zu steuern, aber auch zu vergleichmäßigen. Material und Dimensionierung der Diffusoren und der Linse sind so gewählt, dass eine möglichst gleichmäßige Ausleuchtung des Erfassungsbereiches 1 gewährleistet ist und hängt von der jeweiligen Anwendung ab, also etwa von der optischen Dichte der Objekte 5 und des Anlagenabschnittes 3, Entfernung zwischen Kamera 2 und Anlagenabschnitt 3 sowie zwischen Anlagenabschnitt 3 und Dioden 4 und vieles mehr.

Im Betrieb durchlaufen durchsichtige oder transparente Objekte 5 eines Materialstromes, z.B. eines Sortiergutes, die Anlage und treffen dabei auf den von Zeilenkameras 2 erfassten Anlagenabschnitt 3. Ein Objekt 5 wird hier von diffusem Licht durchleuchtet, das von erfindungsgemäßer Beleuchtungsvorrichtung emittiert wird. Die durch das Vorbeigleiten des Objektes 5 bedingten Modifikationen des von den Dioden emittierten Lichts werden von den Zeilenkameras 2 erfasst, womit Aufschluss über verschiedene Eigenschaften des Objektes 5, wie Materialzusammensetzung, Farbe, Größe oder dergleichen, gewonnen werden kann. Ein vom Erkennungsprozess dieser Kamera gesteuertes Signal regelt schließlich einen nachgeordneten Prozessschritt oder eine nachgeordnete Trenneinrichtung 10.

Nachdem bei Anlagen mit Zeilenkameras 2 meist mehrere solcher Kameras über der Breite des Sortieranlagenabschnittes 3 angeordnet sind, die jeweils einen Abschnitt der Breite beobachten und nachgeordnete Trenneinrichtungen 10 ansteuern, ist es mit erfindungsgemäßer Beleuchtungsanordnung leicht möglich, sie abschnittsweise auf die Gegebenheiten der Zeilenkamera 2 abzustimmen. Das ist bei einer Leuchtstoffröhre, die sich über die gesamte Breite des Anlagenabschnittes erstreckt, nicht möglich. Die Erfindung stellt somit eine kompakte Erkennungseinheit mit vielseitigen Einstell- und Steuerungsmöglichkeiten dar.

## Patentansprüche

1. Vorrichtung zum Erfassen und Erkennen von Objekten (5) eines Materialstromes, die Lichtquellen und mindestens eine Kamera (2), die Eigenschaften der Objekte des Materialstromes wie Materialzusammensetzung, Farbe, Größe oder dergleichen detektiert und zur Ansteuerung von Auswerteeinrichtungen (10) dient, umfaßt, wobei des Materialstrom zwischen den Lichtquellen und dem Erfassungsbereich der Kamera bewegt wird und wobei die Lichtquellen als reihenförmig angeordnete Dioden (4) ausgebildet sind, die hinsichtlich ihrer Helligkeit und/oder der Frequenz des von ihnen emittierten Lichtes getrennt voneinander steuerbar sind, **dadurch gekennzeichnet, dass** die vorrichtung zusätzlich eine optische Einrichtung (6, 7, 8) vorsieht, die zwischen dem Materialstrom (5) und den Dioden (4) angeordnet ist und einen objektseitigen Diffusor (7), einen diodenseitigen Diffusor (6), sowie eine dazwischenliegende Linse (8) umfasst.

2. Vorrichtung nach Anspruch 1, **dadurch gekennzeichnet, dass** es sich bei der Kamera (2) um eine Zeilenkamera handelt, wobei mindestens eine Kamera, vorzugsweise mehrere Kameras, über der Breite eines zum Erfassen und Erkennen der Objekte vorgesehenen Anlagenabschnittes (3) angeordnet sind.

3. Vorrichtung nach Anspruch 1 oder 2, **dadurch gekennzeichnet, dass** die Dioden (4) Weißlicht-Dioden sind.

## Claims

1. An apparatus for detecting and recognizing objects (5) of a stream of material, comprising light sources and at least one camera (2) which detects the properties of the objects of the stream of material such as composition of the material, color, size or the like and is used for triggering evaluating devices (10), with the stream of material being moved between the light sources and the detection region of the camera and with the light sources being configured as diodes (4) which are arranged successively in rows and which can be separately controlled with respect to their brightness and/or the frequency concerning the light as emitted by the same, **characterized in that** the apparatus additionally provides an optical device (6, 7, 8) which is arranged between the stream of material (5) and the diodes (4) and comprises a diffuser (7) on the object side, a diffuser (6) on the diode side, as well as an interposed lens (8).

2. An apparatus as claimed in claim 1, **characterized in that** the camera (2) is a line camera, with at least one camera, preferably several cameras, being arranged over the width of a section (3) of the system which is provided for detecting and recognizing the objects.

3. An apparatus as claimed in claim 1 or 2, **characterized in that** the diodes (4) are white-light diodes.

## Revendications

1. Dispositif pour détecter et reconnaître des objets (5) dans un flux de matériel, du type comprenant des sources lumineuses et au moins une caméra (2) qui détecte les propriétés des objets dans le flux de matériel telles que la composition du matériel, sa couleur, sa taille ou similaire et qui sert à activer des organes d'évaluation (10), le flux de matériel étant en déplacement entre les sources lumineuses et la zone de détection de la caméra, et les sources lumineuses étant conformées sous forme de diodes (4) montées en série qui sont réglables séparément en matière de luminosité et/ou de la fréquence de la lumière qu'elles émettent, **caractérisé en ce que** le dispositif prévoit en outre un système optique (6, 7, 8) qui est disposé entre le flux de matériel (5) et les diodes (4) et qui comprend un diffuseur (7) du côté des objets, un diffuseur (6) du côté des diodes et une lentille (8) interposée.

2. Dispositif selon la revendication 1, **caractérisé en ce que** la caméra (2) est une caméra linéaire, une caméra au moins, de préférence plusieurs caméras, étant disposées sur la largeur d'une partie (3) de l'installation prévue pour détecter et reconnaître les objets.

3. Dispositif selon la revendication 1 ou 2, **caractérisé en ce que** les diodes (4) sont des diodes générant une lumière blanche.
